# FASCICULE DE BREVET EUROPEEN

(11) **EP 0 686 354 B1**
(45) Date de publication et mention de la délivrance du brevet: **01.09.1999**
(21) Numéro de dépôt: 95401315.7
(22) Date de dépôt: 07.06.1995
(51) Int. Cl.: A23P 1/08, B65D 85/72, A23C 9/133

(54) **Produit alimentaire multicouches presentant une couche barrière consommable et recipient associé**
Mehrschichtiges Nahrungsmittel mit Essbarer Trennschicht und angepasster Behälter
Multilayer food product with edible barrier layer and matching container

(30) Priorité: 09.06.1994 FR 9407082
(43) Date de publication de la demande: 13.12.1995
(73) Titulaire: COMPAGNIE GERVAIS-DANONE, F-92302 Levallois Perret (FR)
(72) Inventeur: Fuhrmann, Benoit, F-78690 Les Essarts le Roi (FR); Alabrune, Arnaud, F-75013 Paris (FR)
(74) Mandataire: Jacquard, Philippe Jean-Luc

(56) Documents cités:
- WO-A-93/24024
- NL-C- 129 574
- US-A- 3 411 921
- US-A- 4 874 618

## Description

La présente invention a pour objet un produit alimentaire multicouches comprenant un récipient contenant une première et une deuxième couches alimentaires séparées par une couche barrière consommable présentant une face inférieure constituant un bord supérieur d'un premier volume dans lequel est disposée la première couche et une face supérieure constituant un bord inférieur d'un deuxième volume dans lequel est disposée la deuxième couche.

Un tel produit alimentaire est connu de la Demande de Brevet PCT WO 93/240024 (MULTIFORSA AG). Dans celui-ci, une des couches est un produit laitier frais en particulier du yaourt ou bien une crème dessert, une glace ou un pudding et l'autre couche est un produit sec céréalier tels que des "Crispies" ou du Musli. La couche barrière, qui contient des matières grasses, notamment de l'huile et aussi éventuellement des aromes, est essentiellement dépourvue d'eau de manière à lui permettre de remplir une fonction de protection contre la diffusion d'humidité entre les deux couches. En outre, il est prévu que la couche barrière présente des caractéristiques permettant une isolation entre les deux couches alimentaires sur le plan microbiologique.

D'une manière générale, lors de la fabrication de produits alimentaires associant des ingrédients et des aliments secs (poudres, céréales, épices, biscuits, fruits sec...) à des aliments humides (yaourts, fromages frais, crèmes desserts...) présentant des activités de l'eau différentes, on doit conserver leur qualité nutritionnelle, organoleptique et hygiénique pendant leur durée de vie et ce, notamment malgré des chocs mécaniques, voire des chocs thermiques susceptibles de les altérer.

Lors du transport de produits alimentaires présentant des couches barrières à l'interface de deux couches alimentaires et en particulier d'un produit humide, tels que des produits laitiers, et d'aliments secs, une altération est susceptible de se produire d'un point de vue organoleptique voire hygiénique du fait notamment d'une rupture de l'adhésion de la couche barrière au pot qui constitue le récipient, entraînant un contact entre les deux couches et donc dans le cas précité, entre le produit humide et les aliments secs.

En outre, la texture de la couche barrière à la surface du produit laitier ne donne pas toute satisfaction lors de la consommation du produit à l'aide d'une cuillère en raison d'une remontée du produit laitier à la surface de la couche barrière notamment par le fait que la couche barrière, trop ferme, reste en bloc.

Le Brevet US-4 874 618 (GENERAL MILLS) propose une couche barrière renforcée qui est posée sur un épaulement ménagé à la partie supérieure d'un pot contenant de la glace. Un tel concept n'est pas de nature à donner satisfaction comme le montrent les essais proposés plus loin dans la description.

Un autre concept non satisfaisant est celui proposé par le Brevet néerlandais NL-C-129 574 (MAILOFF). Selon celui-ci (voir fig. 5), la surface supérieure 11a du yoghourt contenu dans un pot de yoghourt 11 est recouverte d'une couche de confiture présentant une face supérieure 12a. La surface supérieure 11a se trouve au niveau d'une région cylindrique 10c située au-dessus de la partie supérieure de rainures ou sillons annulaires 10b qui permettent de renforcer la liaison du yoghourt avec la paroi 10c du pot 10 et d'éviter que le jus de la confiture, éventuellement mélangé à du petit-lait du yoghourt, ne coule vers le fond du pot (flèche 13). De même, le sillon annulaire 10d vise à éviter la migration vers le bas du jus contenu dans la confiture 12. Ce concept, qui exclut la mise en oeuvre d'une couche barrière, ne vise qu'à obtenir un résultat relatif à des produits susceptibles de restituer ou d'exsuder un liquide et ne permet bien évidemment pas une quelconque séparation entre les deux couches (yoghourt et confiture).

La présente invention a pour objet un produit alimentaire de type présentant une couche barrière et ayant une stabilité organoleptique et/ou hygiénique améliorée et pouvant, de préférence, présenter de meilleurs résultats lors de l'action de la cuillère d'un consommateur.

Le produit alimentaire selon l'invention est ainsi caractérisé en ce que le récipient comporte, au moins sur une partie de son pourtour intérieur, un rebord, en ce que la région de jonction entre la face supérieure de la couche barrière et le contour intérieur est située au-dessus du rebord et en ce que la région de jonction entre la face inférieure de la couche barrière et le pourtour intérieur est située en-dessous du rebord.

Du fait que la couche barrière chevauche le rebord, celle-ci forme une sorte de bouchon qui est ajusté au-dessus de la première couche alimentaire, ce qui en améliore la tenue lorsque le produit est soumis à des vibrations, par exemple lors de son transport, ou bien à des variations de températures.

Il est préférable que le rebord soit continu et s'étende sur la totalité du pourtour intérieur mais, en variante le rebord peut comporter une pluralité de régions espacées les unes des autres sur le pourtour intérieur.

La couche barrière peut être une couche grasse hydrophobe permettant d'assurer une protection organoleptique et/ou microbiologique entre la première et la deuxième couches.

Selon un mode de réalisation préféré permettant d'obtenir des résultats optimaux sous l'action de la cuillère lors de la consommation du produit, la couche barrière présente une valeur au test de pénétrométrie, comprise entre 0,3 et 0,5N et de préférence entre 0,35 et 0,45N.

Le test de pénétrométrie est en particulier réalisé selon la méthode référencée CIRDC n° 112/01, l'appareil étant le modèle DY30 Adamel Lhomargy, avec un capteur de 10 Newton, le mobile étant un cylindre de 1,98 mm de diamètre, et la vitesse de descente du mobile dans le produit étant de 50 mm/mn.

De manière à assurer un bon accrochage mécanique de la couche barrière au rebord du récipient, il est conseillé que le rebord présente une largeur 1 qui soit au moins égale à 1mm, la valeur préférée étant comprise entre 2 et 4mm.

Pour obtenir une protection organoleptique et microbiologique suffisante entre la première et la deuxième couches alimentaires, ainsi qu'un accrochage mécanique satisfaisant, il est recommandé que la couche barrière présente une épaisseur e au moins égale à 2mm, la valeur préférée étant comprise entre 4 et 8mm.

La couche barrière peut présenter une hauteur h en recouvrement du rebord qui soit égale à au moins la moitié de l'épaisseur e de la couche barrière prise au voisinage du rebord.

L'invention concerne également un procédé de fabrication d'un produit alimentaire tel que défini ci-dessus caractérisé en ce qu'il comporte les étapes suivantes :
a) dosage dans le récipient de la première couche alimentaire de telle sorte qu'elle présente une surface supérieure située à une distance prédéterminée d du rebord,
b) dosage de la couche barrière à la surface de la première couche alimentaire de manière à la recouvrir totalement ainsi que la surface du rebord du récipient,
c) après prise de la couche barrière par refroidissement, dépôt de la deuxième couche alimentaire à la surface supérieure de la couche barrière.

D'autres caractéristiques et avantages de l'invention apparaîtront mieux à la lecture de la description qui va suivre, donnée à titre d'exemple non limitatif, en liaison avec les dessins, dans lesquels :
- la figure 1 représente un assemblage de deux pots pourvus de rebords selon l'invention dont une variante est représentée en encadré ;
- la figure 2 représente une vue agrandie de la partie supérieure d'un produit alimentaire selon un mode de réalisation préféré de l'invention ;
- les figures 3a à 3c illustrent un mode de réalisation préféré d'un procédé de remplissage d'un produit alimentaire selon l'invention.
- les figures 4a à 4c représentent quatre configurations d'essai, conforme à la présente invention pour la figure 4a, analogue au Brevet US-4 874 618 précité pour la figure 4b, et correspondant à une variante dérivée du Brevet US-4 874 618 pour la figure 4c.
- et la figure 5, un pot dépourvu de couche barrière selon le Brevet NL-C-129 574 précité.

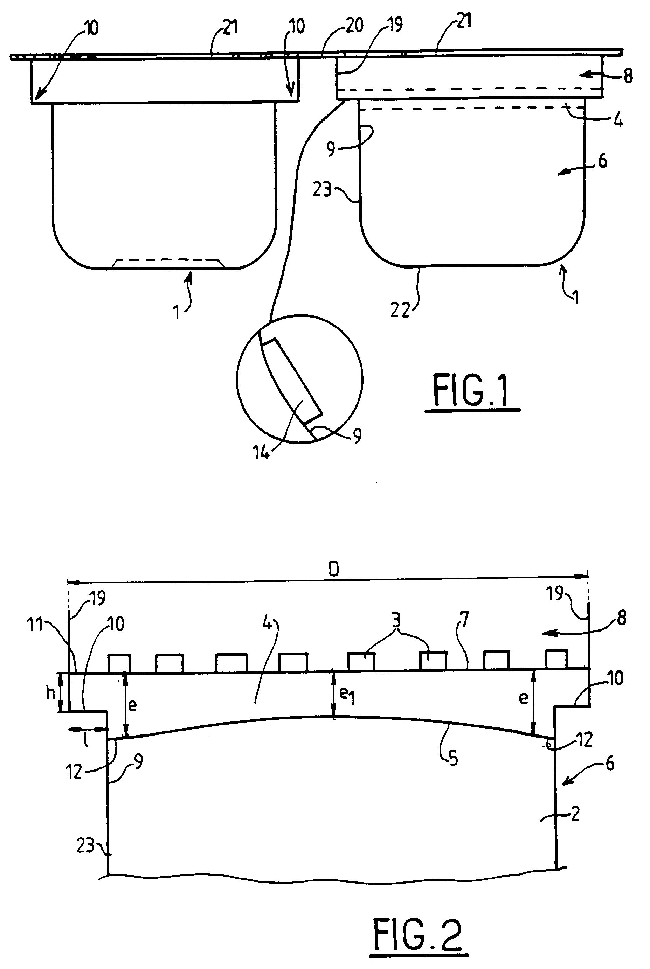

Sur les figures, on voit qu'un récipient, en particulier un pot, désigné par le repère général 1 présente un fond 22, et des parois latérales 23 et est refermé à sa partie supérieure par un film de scellement 21, les différents pots 1 étant reliés entre eux par des régions 20 qui peuvent être séparées par rupture mécanique. La partie supérieure du bord 23 présente un rebord 10 formant un décrochement vers l'extérieur de largeur 1 d'où il résulte une région élargie 19 s'étendant depuis le rebord 10 jusqu'aux régions 20, cette région élargie 19 pouvant, comme les bords 23, être de profil droit, comme représenté à la figure 1, ou bien évasée vers l'extérieur du pot 1.

Comme le montre plus particulièrement la figure 2, la couche barrière 4 est disposée à la surface de la première couche 2 qui remplit de préférence entièrement le volume 6, qui est ici une crème dessert et elle présente une épaisseur e au voisinage du pourtour intérieur 9 du pot 1. Dans la région centrale du pot, la couche barrière 4 telle que représentée à la figure 2 présente une épaisseur e₁ qui est inférieure à l'épaisseur e, mais on notera que cette épaisseur e₁ n'a pas d'influence sur les propriétés de tenue mécanique de la couche barrière 4 vis-a-vis du rebord 10. Le rebord 10 est de préférence continu et s'étend sur tout le pourtour intérieur 9, mais en variante, il peut être composé de secteurs 14, comme représenté en encadré à la figure 1. La couche barrière 4 présente une hauteur h en recouvrement du rebord 10, cette hauteur h devant être suffisante pour assurer une bonne liaison mécanique de la couche barrière 4 encastrée dans le rebord 10. Des particules de noisette 3 sont disposées sur la face supérieure.

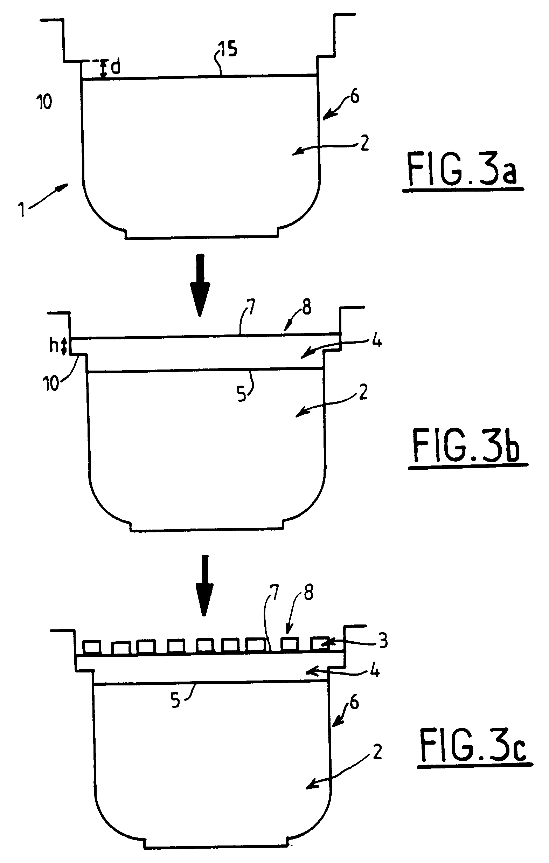

Les figures 3a à 3c montrent les trois étapes de réalisation d'un produit alimentaire telles que définies ci-dessus. La figure 3a illustre l'étape numéro 1 dans laquelle la crème dessert 2 est dosée dans le pot 1 de manière que sa face supérieure 15 soit disposée à une distance d prédéterminée du rebord 10. La figure 3b illustre l'étape numéro 2 dans laquelle la couche barrière 4 est déposée à la surface 15 de la crème dessert 2 de telle sorte que sa face supérieure 7 vienne en recouvrement de la hauteur h sur le rebord 10. Dans cet exemple, la couche barrière 4 est constituée à 74% par une matière grasse elle-même constituée d'huile de colza partiellement hydrogénée et dont le degré d'hydrogénation est choisi de manière à permettre d'obtenir la fermeté désirée de la couche barrière 4, de 20% de sucre et de 6% de poudre de cacao et éventuellement de traces d'aromes. La couche barrière 4 est déposée en phase liquide ou semi-liquide, par exemple entre 30 et 40°C, ce qui lui permet de cristalliser après son refroidissement. C'est après ce refroidissement qu'est réalisée l'étape 3 illustrée à la figure 3c, à savoir le dépôt d'une couche de noisettes 3 sous forme d'un croquant de noisettes comportant un certain nombre de particules de noisettes séparées les unes des autres, et remplissant partiellement le volume 8.

### ESSAI I :

Dans un pot 1 de forme sensiblement carrée à coins arrondis et dont le côté a une valeur D égale à 64mm et qui présente un rebord 10 d'une largeur 1 égale à 4mm, on a disposé à la surface d'une crème dessert 2 une couche barrière 4 et une couche de noisettes conformes à l'exemple des figures 3a à 3c, la couche barrière 4 présentant une valeur au test de pénétrométrie comprise entre 0,35 et 0,45N, cette couche barrière 4 ayant une épaisseur e comprise entre 6,5 et 8mm et une épaisseur eₗ comprise entre 4 et 5mm, la hauteur h étant égale à 4,5mm, pour un poids total de 16g.

Il a été constaté que l'action de la cuillère permettait une découpe facile en plusieurs morceaux de la couche barrière maintenue mécaniquement par le rebord 10, alors que les propriétés microbiologiques et organoleptiques ont été testées par comparaison entre un pot à rebord intérieur et un pot dépourvu de rebord intérieur, toutes choses égales par ailleurs, selon le Tableau ci-dessous.

| Conditions de conservation | | | Pot à rebord intérieur | % de pots défectueux d'un point de vue: | |
|---|---|---|---|---|---|
| choc mécanique (3) | choc thermique | conservation | | microbiologique (1) | organoleptique (2) |
| 600 km | 30 mn | 28 jours | | | |
| | 20°C | à 10°C | non | 44 % | 100% |
| 600 km | 30 mn | 28 jours | | | |
| | 20°C | à 10°C | oui | 1,5% | 0% |
| 600 km | 3heures | 28 jours | | | |
| | 30°C | à 10°C | non | 27% | 100% |
| 600 km | 3heures | 28 jours | | | |
| | 30°C | à 10° C | oui | 3% | 0% |

| | | | | | |
|---|---|---|---|---|---|
| note (1) pH et/ou gonflement et/ou odeur et/ou aspect : non satisfaisant | | | | | |
| (2) perte de croquant des noisettes. | | | | | |
| (3) distance de transport | | | | | |

On remarquera en pratique, qu'un test effectué à la cuillère permet de déterminer sans difficulté la consistance de la couche 4 qui permet une bonne séparation de celle-ci en plusieurs morceaux. En effet, une couche trop ferme risque de se briser en deux morceaux alors qu'une couche trop tendre risque d'être défectueuse au point de vue du test microbiologique et/ou organoleptique.

### ESSAIS II :

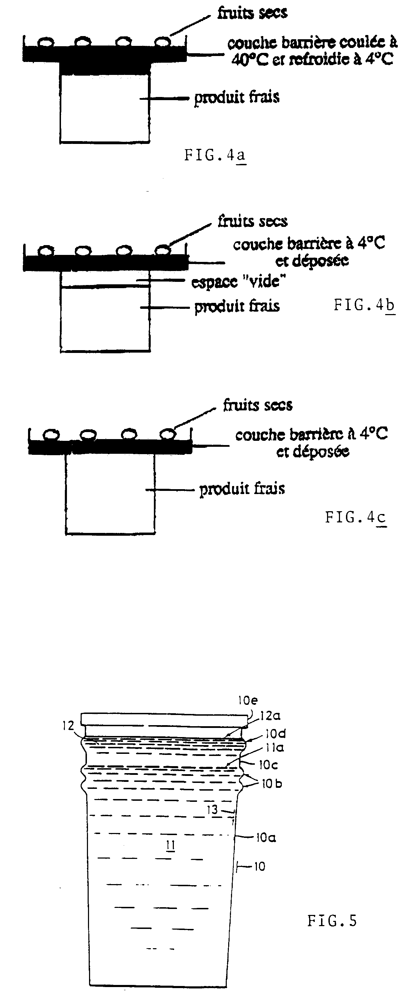

Ces essais sont relatifs à trois configurations n° 1 (fig. 4a), n° 2 (fig. 4b) et n° 3 (fig. 4c) qui correspondent respectivement :
- pour la configuration n° 1, à un dispositif selon l'invention avec pour la couche barrière, coulée à 40°C et refroidie ensuite à 4°C, une valeur, au test de pénétrométrie, (réalisé selon la méthode d'analyse précitée référencée CIRDC n° 112/01) inférieure à 0,5N ;
- pour la configuration n°2, à une couche barrière déposée à 4°C, analogue à celle du Brevet US-4 874 618 mais ne comprenant pas de couche biscuitée 80. La couche barrière doit être beaucoup plus ferme que précédemment avec une valeur, au test de pénétrométrie précité, nettement supérieure à 0,5N et qui est égale dans l'essai à 20N ;
- pour la configuration n° 3, à une couche barrière déposée à 4°C, comme dans le cas de la configuration n° 2, mais sans espace vide entre le produit frais contenu dans le pot et la couche barrière déposée.

Les résultats sont consignés dans le tableau ci-après :

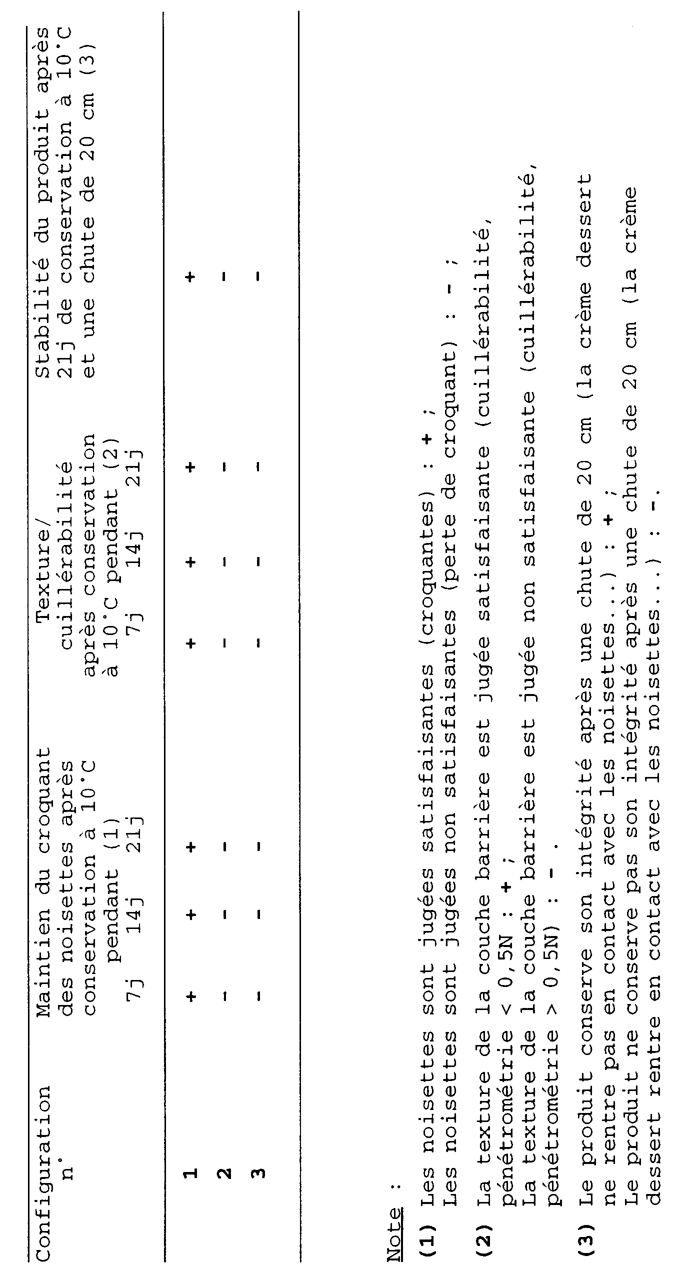

### CONCLUSIONS :

La configuration n° 1 (produit correspondant à la présente invention) correspond à l'objectif fixé en terme de maintien du croquant des noisettes, texture de la couche barrière et stabilité du produit. A l'inverse, la configuration n° 2 (correspondant au Brevet US-4 874 618) ne correspond pas à la qualité organoleptique désirée. Il est à noter qu'il est nécessaire d'avoir une texture de couche barrière nettement supérieure à 0,5N pour réaliser le produit correspondant au Brevet US-4 874 618 afin de pouvoir déposer la couche barrière sur l'épaulement. Pour nos essais, nous avons utilisé une couche barrière ayant une valeur de 20N au test de pénétrométrie réalisé d'après la méthode d'analyse précitée référencée CIRDC n° 112/01.

### ESSAIS III

Ces essais sont effectués à partir de la configuration n° 1 (fig. 4a) en faisant varier la largeur 1 de l'épaulement 10.

Les résultats sont consignés dans le tableau ci-après :

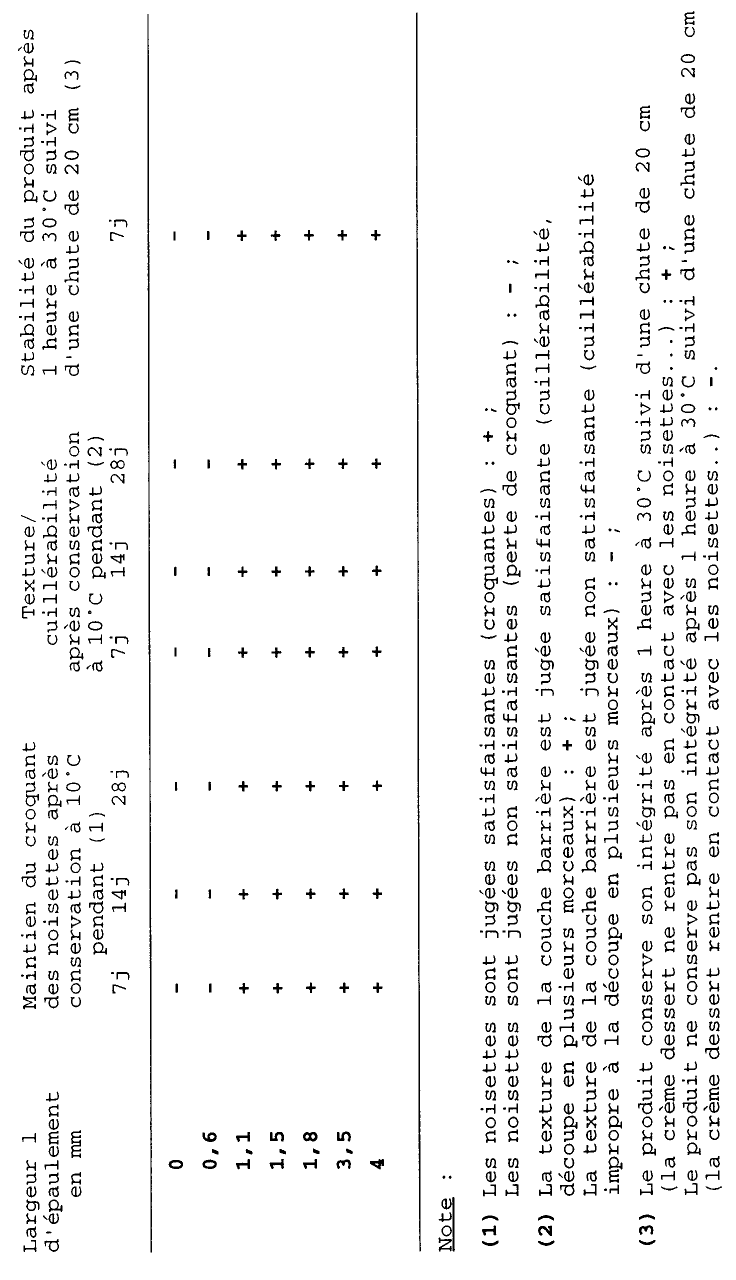

### CONCLUSIONS :

Ces résultats confirment qu'il est nécessaire d'avoir un épaulement. Il doit être d'au moins 1mm environ pour maintenir la qualité organoleptique du produit.

## Revendications

1. Produit alimentaire multicouches comprenant un récipient (1) contenant une première (2) et une deuxième (3) couches alimentaires séparées par une couche barrière consommable (4) présentant une face inférieure (5) constituant un bord supérieur d'un premier volume (6) dans lequel est disposée la première couche (2) et une face supérieure (7) constituant un bord inférieur d'un deuxième volume (8) dans lequel est disposée la deuxième couche (3) caractérisé en ce que le récipient (1) comporte, au moins sur une partie de son pourtour intérieur (9), un rebord (10), et en ce que la région de jonction (11) entre la face supérieure (7) de la couche barrière (4) et le pourtour intérieur (9) est situé au-dessus du rebord (10) et en ce que la région de jonction (12) entre la face inférieure (5) de la couche barrière (4) et le pourtour intérieur (9) est situé en-dessous du rebord (10).

2. Produit alimentaire selon la revendication 1 caractérisé en ce que le rebord (10) est continu et s'étend sur la totalité du pourtour intérieur (9).

3. Produit alimentaire selon la revendication 1 caractérisé en ce que le rebord (10) comporte une pluralité de régions (14) espacées les uns des autres sur le pourtour intérieur (9).

4. Produit alimentaire selon une des revendications précédentes caractérisé en ce que la couche barrière (4) est une couche grasse hydrophobe permettant d'assurer une protection organoleptique et/ou microbiologique entre la première (2) et la deuxième (3) couches.

5. Produit alimentaire selon une des revendications précédentes caractérisé en ce que la couche barrière (4) présente une valeur, au test de pénétrométrie, comprise entre 0,3N et 0,5N et de préférence entre 0,35N et 0,45N.

6. Produit alimentaire selon une des revendications précédentes caractérisé en ce que le rebord (10) présente une largeur 1 au moins égale à 1 mm.

7. Produit alimentaire selon la revendication 6 caractérisé en ce que la largeur 1 est comprise entre 2 et 4 mm.

8. Produit alimentaire selon une des revendications précédentes caractérisé en ce que la couche barrière (4) présente une épaisseur e au moins égale à 2 mm.

9. Produit alimentaire selon la revendication 8 caractérisé en ce que l'épaisseur e est comprise entre 4 et 8 mm.

10. Produit alimentaire selon une des revendications précédentes caractérisé en ce que la couche barrière (4) présente une hauteur h en recouvrement du rebord (10) qui est égale à au moins la moitié de l'épaisseur e de la couche barrière (4) prise au voisinage du rebord (10).

11. Produit alimentaire selon une des revendications précédentes caractérisé en ce que la première (2) et la deuxième (3) couches alimentaires présentant des activités de l'eau différentes.

12. Procédé de fabrication d'un produit alimentaire selon une des revendications précédentes caractérisé en ce qu'il comporte les étapes suivantes :
a) dosage dans le récipient de la première couche alimentaire (2) de telle sorte qu'elle présente une surface supérieure (15) située à une distance prédéterminée d du rebord (10),
b) dosage de la couche barrière (4) sous forme liquide ou semi-liquide à la surface (15) de la première couche alimentaire (2) de manière à la recouvrir totalement ainsi que la surface du rebord (10) du récipient (1),
c) après prise de la couche barrière (4) par refroidissement, dépôt de la deuxième couche alimentaire (3) à la surface supérieure (7) de la couche barrière (4).

## Claims

1. A multilayer food product including a container (1) containing a first (2) and a second (3) food layer separated by an edible barrier layer (4) having a lower face (5) constituting an upper edge of a first volume (6) in which is placed the first layer (2) and an upper face (7) constituting a lower edge of a second volume (8) in which is placed the second layer (3) characterised in that the container (1) comprises, at least over a part of its inner periphery (9), a ledge (10), and in that the junction area (11) between the upper face (7) of the barrier layer (4) and the inner periphery (9) is located above the ledge (10) and in that the junction area (12) between the lower face (5) of the barrier layer (4) and the inner periphery (9) is located beneath the ledge (10).

2. A food product according to claim 1 characterised in that the ledge (10) is continuous and extends over the whole of the inner periphery (9).

3. A food product according to claim 1 characterised in that the ledge (10) comprises several areas (14) spaced out from each other over the inner periphery (9).

4. A food product according to one of the previous claims characterised in that the barrier layer (4) is a water-repellent fat layer enabling an organoleptic and/or micro-biological protection to be provided between the first (2) and the second (3) layers.

5. A food product according to one of the previous claims characterised in that the barrier layer (4) has a value, by penetrometer test, of between 0·3N and 0·5N and preferably between 0·35N and 0·45N.

6. A food product according to one of the previous claims characterised in that the ledge (10) has a width 1 at least equal to 1 mm.

7. A food product according to claim 6 characterised in that the width 1 is between 2 and 4 mm.

8. A food product according to one of the previous claims characterised in that the barrier layer (4) has a thickness e at least equal to 2 mm.

9. A food product according to claim 8 characterised in that the thickness e is between 4 and 8 mm.

10. A food product according to one of the previous claims characterised in that the barrier layer (4) has a height h covering the ledge (10) which is equal to at least half the thickness e of the barrier layer (4) measured near the ledge (10).

11. A food product according to one of the previous claims characterised in that the first (2) and the second (3) food layers have different water activities.

12. A food product manufacturing process according to one of the previous claims characterised in that it comprises the following stages:
a) measuring out the first food layer (2) in the container of in such a way that it has an upper surface (15) located at a pre-specified distance d from the ledge (10),
b) measuring out the barrier layer (4) in the form of liquid or semi-liquid onto the surface (15) of the first food layer (2) so as to cover it completely as well as the surface of the ledge (10) of the container (1),
c) after the barrier layer (4) has been set by chilling, applying the second food layer (3) onto the upper surface (7) of the barrier layer (4).

## Patentansprüche

1. Mehrschichtiges Nahrungsmittelprodukt mit einem Behälter (1), der eine erste Nahrungsmittelschicht (2) und eine zweite Nahrungsmittelschicht (3) enthält, die durch eine verzehrbare Sperrschicht (4) voneinander getrennt sind, wobei die Sperrschicht eine Unterseite (5) aufweist, die eine obere Begrenzung eines ersten Volumens (6) darstellt, in dem die erste Schicht (2) angeordnet ist, und eine Oberseite (7), welche eine untere Begrenzung eines zweiten Volumens (8) darstellt, in dem die zweite Schicht (3) angeordnet ist, **dadurch gekennzeichnet, daß** der Behälter (1) zumindest über einen Teil seines inneren Umfangs (9) eine Abstufung (10) aufweist, dadurch, daß sich der Übergangsbereich (11) zwischen der Oberseite (7) der Sperrschicht (4) und dem inneren Umfang (9) oberhalb der Abstufung (10) befindet, sowie dadurch, daß sich der Übergangsbereich (12) zwischen der Unterseite (5) der Sperrschicht (4) und dem inneren Umfang (9) unterhalb der Abstufung (10) befindet.

2. Nahrungsmittelprodukt nach Anspruch 1, dadurch gekennzeichnet, daß die Abstufung (10) kontinuierlich ist und sich über die Gesamtheit des inneren Umfangs (9) erstreckt.

3. Nahrungsmittelprodukt nach Anspruch 1, dadurch gekennzeichnet, daß die Abstufung (10) auf dem inneren Umfang (9) eine Mehrzahl voneinander beabstandeter Bereiche (14) aufweist.

4. Nahrungsmittelprodukt nach einem der vorhergehenden Ansprüche, dadurch gekennzeichnet, daß die Sperrschicht (4) eine hydrophobe fetthaltige Schicht ist, welche die Herstellung eines organoleptischen und/oder mikrobiologischen Schutzes zwischen der ersten Schicht (2) und der zweiten Schicht (3) ermöglicht.

5. Nahrungsmittelprodukt nach einem der vorhergehenden Ansprüche, dadurch gekennzeichnet, daß die Sperrschicht (4) bei penetrometrischer Prüfung einen zwischen 0,3N und 0,5N und bevorzugt zwischen 0,35N und 0,45N liegenden Wert aufweist.

6. Nahrungsmittelprodukt nach einem der vorhergehenden Ansprüche, dadurch gekennzeichnet, daß die Abstufung (10) eine Breite 1 von mindestens gleich 1 mm aufweist.

7. Nahrungsmittelprodukt nach Anspruch 6, dadurch gekennzeichnet, daß die Breite 1 zwischen 2 und 4 mm beträgt.

8. Nahrungsmittelprodukt nach einem der vorhergehenden Ansprüche, dadurch gekennzeichnet, daß die Sperrschicht (4) eine Dicke e von mindestens gleich 2 mm aufweist.

9. Nahrungsmittelprodukt nach Anspruch 8, dadurch gekennzeichnet, daß die Dicke e zwischen 4 und 8 mm beträgt.

10. Nahrungsmittelprodukt nach einem der vorhergehenden Ansprüche, dadurch gekennzeichnet, daß die Sperrschicht (4) eine die Abstufung (10) bedeckende Höhe h aufweist, die bei Messung in der Nähe der Abstufung (10) mindestens gleich der Hälfte der Dicke e der Sperrschicht (4) ist.

11. Nahrungsmittelprodukt nach einem der vorhergehenden Ansprüche, dadurch gekennzeichnet, daß die erste Nahrungsmittelschicht (2) und die zweite Nahrungsmittelschicht (3) unterschiedliche Wasseraktivitätswerte aufweisen.

12. Verfahren zur Herstellung eines Nahrungsmittelproduktes gemäß einem der vorhergehenden Ansprüche, dadurch gekennzeichnet, daß es die folgenden Schritte aufweist:
a) Zumessen der ersten Nahrungsmittelschicht (2) in den Behälter auf eine solche Weise, daß sie eine in einem vorgegebenen Abstand d von der Abstufung (10) befindliche obere Oberfläche (15) aufweist,
b) Zumessen der Sperrschicht (4) in flüssiger oder halbflüssiger Form auf die Oberfläche (15) der ersten Nahrungsmittelschicht (2) auf eine solche Weise, daß sie diese wie auch die Oberfläche der Abstufung (10) des Behälters (1) vollständig bedeckt,
c) nach der Verfestigung der Sperrschicht (4) mittels Kühlen, Aufbringen der zweiten Nahrungsmittelschicht (3) auf die obere Oberfläche (7) der Sperrschicht (4).
